# EUROPEAN PATENT SPECIFICATION

(11) **EP 2 249 655 B1**
(45) Date of publication and mention of the grant of the patent: **21.02.2018**
(21) Application number: 09714858.9
(22) Date of filing: 25.02.2009
(51) Int. Cl.: A23C 11/10, A23L 29/30

(54) **FERMENTED SOYMILK AND METHOD FOR IMPROVING THE ORGANOLEPTIC PROPERTIES OF FERMENTED SOYMILK**
FERMENTIERTE SOJAMILCH UND VERFAHREN ZUR VERBESSERUNG DER ORGANOLEPTISCHEN EIGENSCHAFTEN DER SOJAMILCH
LAIT DE SOJA ET PROCÉDÉ D'AMÉLIORATION DES PROPRIÉTÉS ORGANOLEPTIQUES DU LAIT DE SOJA

(30) Priority: 26.02.2008 IT MI20080306
(43) Date of publication of application: 17.11.2010
(73) Proprietor: Probiotical S.p.A., 28100 Novara (NO) (IT)
(72) Inventor: STROZZI, Gian Paolo, I-28100 Novara (IT); MOGNA, Giovanni, I-28100 Novara (IT); MOGNA, Luca, I-28100 Novara (IT)
(74) Representative: Hoffmann Eitle
(86) International application number: PCT/EP2009/052208
(87) International publication number: WO 2009/106536

(56) References cited:
- EP-A1- 1 010 753
- WO-A1-2007/054989
- DE-A1- 2 406 600
- GB-A- 1 438 315
- US-A1- 2003 031 756
- PINTHONG R ET AL: "The development of a soya-based yoghurt. Part 2: Sensory evaluation and analysis of volatiles" JOURNAL OF FOOD TECHNOLOGY, BLACKWELL SCIENTIFIC PUBLICATIONS, GB, vol. 15, no. 2, 1 January 1980 (1980-01-01), pages 653-659, XP009121081 ISSN: 0022-1163
- BLAGDEN T D ET AL: "Reduction of levels of volatile components associated with the beany flavor in soymilk by lactobacilli and streptococci." JOURNAL OF FOOD SCIENCE, vol. 70, no. 3, 2005, pages M186-M189, XP002540129
- COLLADO L S ET AL: "YOGURT-LIKE PRODUCTS FROM RICEFLOUR AND SOYMILK" PHILIPPINE AGRICULTURIST, COLLEGE OF AGRICULTURE AND CENTRAL EXPERIMENT STATION, LAGUNA, PH, vol. 77, no. 3, 1 July 1994 (1994-07-01), pages 307-319, XP001011539 ISSN: 0031-7454
- MURTI T W ET AL: "BACTERIAL GROWTH AND VOLATILE COMPOUNDS IN YOGHURT-TYPE PRODUCTS FROM SOYMILK CONTAINING BIFIDOBACTERIUM SSP" JOURNAL OF FOOD SCIENCE, WILEY-BLACKWELL PUBLISHING, INC, US, vol. 58, no. 1, 1 January 1993 (1993-01-01), pages 153-157, XP000356108 ISSN: 0022-1147
- K O Jimoh ET AL: "Effect of different stabilizers on acceptability and shelf- stability of soy-yoghurt", African Journal of Biotechnology Academic Journals Full Length Research, 16 April 2007 (2007-04-16), pages 1000-1003, XP055309627, Retrieved from the Internet: URL:http://www.ajol.info/index.php/ajb/art icle/download/57031/45429 [retrieved on 2016-10-11]
- DATABASE GNPD [Online] MINTEL; January 2008 (2008-01), annon: "Strawberry Soy yogurt", Database accession no. 835753
- DATABASE GNPD [Online] MINTEL; August 2007 (2007-08), annon: "Soy Yogurt", Database accession no. 764959
- DATABASE GNPD [Online] MINTEL; August 2001 (2001-08), annon: "Silk Soy Yogurt Repackaging", Database accession no. 10091205

## Description

The present invention relates to fermented soymilk and to a method for improving the organoleptic properties of fermented soymilk.

There are some categories of consumers who may develop a certain intolerance to products of animal origin such as milk and milk products, as a result of which these products can in some cases no longer be used for daily nutrition, or their consumability will in any case be considerably limited. Lactose intolerances and allergies to casein, one of the major protein classes present in milk, are in fact quite wide-spread both among children and adults. A known alternative to using milk of animal origin is the use of milk of substantially vegetable origin and of food products derived therefrom.

Specifically the use of soymilk is known for its salutary properties. Said milk indeed contains fewer calories than cow's milk and its protein content is almost twice as high and its fat concentration lower. It is richer in iron and its percentage of B-group vitamins is equivalent. It is poorer in calcium but has a high content of polyunsaturated fatty acids and is easy to digest. The presence of lecithin may, in addition, considerably contribute to lowering excessive cholesterol and triglyceride levels in the blood, whereas proteins of animal origin, and in particular milk casein, tend to increase these levels.

Soymilk is used in the production of a variety of fermented and unfermented food products. Therefore, although the use of soymilk would, on the one hand, represent a valid alternative to milk of animal origin when it comes to solving intolerance problems, its use is limited, on the other hand, by the poor organoleptic properties of the product itself.

It is known, in fact, that the taste and/or smell of soymilk is very similar to that of beans which will be perceived by consumers at the moment of consumption. Said taste and/or aroma is perceived as "unpleasant" by the average consumer. This taste and/or aroma is believed to be substantially due to the presence in the milk of some compounds comprising alcohol, ketone and/or aldehyde groups, and especially, but not only, hexanal and/or pentanal compounds.

Said alcohol, ketone and/or aldehyde groups are produced by oxidation of the lipid component of soy, notably of the fraction of unsaturated fatty acids, by way of a combined catalytic action mediated by the enzymes lipase, phospholipase and lipoxygenase. The latter class of enzymes is present in soy in particularly high concentrations exceeding those to be found in other vegetable and leguminous organisms such as beans, peas or wheat. The free fatty acids are, in addition, subject to autoxidation reactions due to the catalytic activity of the copper and iron ions normally present in trace amounts in soy seeds.

Following oxidation, linoleic acid and linolenic acid, which both have 18 carbon atoms, give rise to numerous aldehyde compounds such as hexanal, 2,4-decadienal, 2,4-heptadienal, 3-hexanal and 2,4,7-decatrienal.

Said aldehyde molecules are responsible for the occurrence of various unpleasant organoleptic notes, notably the bean-like taste of soy-based or soy-derived products.

The above aldehyde molecules are not generally present in solid and dry soy beans, but are produced, even in significant amounts, when said beans are soaked and ground to produce the so-called "milk".
The article by P. Scalabrini et al., "Characterization of Bifidobacterium strains for use in soymilk fermentation", International Journal of Food Microbiology, 39 (1998) 213-219, reports on data regarding the fermentation of soymilk by the strain MB233, which belongs to the species *Bifidobacterium breve.* It can, in particular, be learned from gas chromatographic analyses that after fermentation for 24 hours the resulting fermented soymilk is substantially free of pentanal, whereas n-hexanal is present in a reduced amount.
The Applicant has found by way of experiment that fermentation of soy milk by the strain MB233 belonging to the species *Bifidobacterium breve,* as reported on by P. Scalabrini et al., does not in reality allow a product to be obtained having satisfactory organoleptic properties. Practical tastings have, in fact, revealed that the resulting product still smells and, above all, tastes to a non-negligible extent of beans, which makes it unfit for commercial use.

GB 1438315 describes a bean odour-free soy bean product and a method for its production, which comprises distillation under reduced pressure.
Jimoh, K. O. and Kolapo, A.L. (African Journal of Biotechnology 2007, vol. 6(8), pp. 1000-1003) describes the effect of stabilizers on acceptability and shelf-stability of soy-yoghurt.

PINTHONG R ET AL: "The development of a soya-based yoghurt. Part 2: Sensory evaluation and analysis of volatiles: "JOURNAL OF FOOD TECHNOLOGY, BLACKWELL SCIENTIFIC PUBLICATIONS, GB, vol. 15, no. 2, 1 January 1980, discloses soy milk supplemented with yeast extract and glucose, fermented with L. bulgaricus and/or S thermophilus.

Therefore, the Applicant has set itself the object of finding a method which allows the organoleptic properties of fermented soymilk to be improved so as to substantially eliminate the typical bean-like smell and taste of untreated soymilk.
The Applicant has found that this problem can be solved by a method which comprises the addition of a product of vegetable origin containing starch and hydrolysis products thereof and successive fermentation by at least one bacterium selected from the species *S. thermophilus.*

The product of vegetable origin containing starch and hydrolysis products thereof can be obtained by way of thermal, chemical and/or enzymatic treatment of at least one vegetable flour, obtained for example from cereals such as rice, corn, barley, maize, wheat, sorghum, millet, oat, rye, fonio, triticale, or from tuber crop, for example manioc, tapioca, potatoes. Hydrolysis may be partial. Such treatments lead to the obtainment of a product in the form of a viscous liquid (syrup or molasses) or of an aqueous solution containing glucose, maltose and/or fructose, as well as complex carbohydrates having a molecular weight higher than maltose and derived from starch as such or from partially hydrolyzed starch, in variable quantitative proportions to each other.
For the purposes of the present invention, "soymilk" is understood to mean an aqueous extract obtained from preferably yellow, whole soy beans or seeds or from full-fat soy flour, possibly with added vitamins and/or oligoelements and/or salts and/or emulsifiers and/or sweeteners/flavor enhancers such as maple syrup, barley or rice malt, vanilla sugar, unrefined cane sugar. The extract may be whole-grain or refined-grain, i.e. obtained from soy seeds after elimination of the outer shell. Soymilk is a whitish solution in the form of an emulsion or suspension containing carbohydrates, proteins, minerals and oleaginous substances. In general, soymilk contains a quantitative proportion (w/w) of soy beans/flour to water of between 1:4 and 1:18, preferably between 1:6 and 1:15, and more preferably between 1:8 and 1:12.
For the purposes of the present invention, "rest(ing)" is understood to mean a step in which at least one bacterium selected from one or more bacterial strains is grown, i.e. fermented, in soymilk, preferably mixed with at least one product of vegetable origin containing starch and/or hydrolysis products thereof, for a time that is sufficient for its special catalytic and metabolic features to become apparent.
A first object of the present invention is thus a method for improving the organoleptic properties of fermented soymilk, said method comprising:
i) mixing the soymilk with at least one product of vegetable origin containing starch and/or hydrolysis products thereof, which is obtained by means of thermal, chemical and/or enzymatic treatment of tapioca flour
ii) fermenting the mixture of step i) with at least one bacterium selected from the species *S. thermophilus,* comprising at least one bacterium selected from the group of strains as set out in Table 1.
Preferably, said at least one product of vegetable origin containing starch and hydrolysis products thereof is used in a quantitative proportion relative to the soymilk varying from 0.1% to 50% v/v, preferably from 1% to 25% v/v, and even more preferably from 2% to 10% v/v. A particularly preferred embodiment of the invention is that in which said proportion is from 3% to 7% v/v.
Preferably, the product of vegetable origin containing starch and hydrolysis products thereof is tapioca syrup. Said tapioca syrup can be obtained with different degrees of qualitative/quantitative conversion of the starch to simple monomers or oligomers such as maltose, glucose and/or fructose.
In a preferred embodiment, the soymilk is pre-heated, prior to the mixing according to step (i) of the method according to the invention, to a temperature varying from 30°C to 70°C, preferably from 35°C to 50°C, for a length of time varying from 1 to 30 minutes, preferably from 3 to 15 minutes. Said at least one bacterium selected from the species *S. thermophilus* is added, preferably in step (ii), to the mixture and is left to rest (fermented). Preferably, said rest is performed at a temperature varying from 30°C to 49°C, preferably from 35°C to 46°C, and even more preferably from 39°C to 44°C.
In view of the chemical characteristics of the above mixture, it is advantageously preferable to work under sterile nitrogen pressure or at least under conditions of reduced oxygen concentration so as to avoid as far as possible oxidation phenomena to the detriment of the lipid component of the soy.
Advantageously, the addition of the product of vegetable origin containing starch and hydrolysis products thereof during the method allows the time required for the resting (fermenting) step to be reduced to less than 20 hours. Preferably, the resting (fermenting) process is carried out for a length of time varying from 1 to 20 hours and even more preferably from 2 to 15 hours; with 3 to 10 hours being particularly preferred.
Said at least one bacterium can be used in any form such as, for example, frozen or lyophilized, or originating from a fresh culture.
The at least one bacterium as specified above is preferably added in such an amount as to ensure that the pH value of said resting (fermenting) mixture successively drops until it reaches values that are lower than or equal to 5.5 within the time periods described above, and that are preferably lower than or equal to 5.0, with said value being even more preferably lower than or equal to 4.5.
In a particularly preferred embodiment, the pH value of the mixture according to point i) drops to values lower than or equal to 4.5 within a length of time ranging from 7.5 to 8 hours.

In the method according to the present invention, said at least one bacterium is selected from the strains set out in Table 1:

**Table 1**

| **Deposit number** | **Species** | **Date of deposit** | **Proprietor** | **Reference name for the patent** |
|---|---|---|---|---|
| DSM 16591 | *Streptococcus thermophilus* | June 26, 2004 | ANIDRAL S.R.L. | YOSO 1 |
| DSM 16593 | *Streptococcus thermophilus* | June 26, 2004 | ANIDRAL S.R.L. | YOSO 2 |
| DSM 17843 | *Streptococcus thermophilus* | December 21, 2005 | ANIDRAL S.R.L. | YOSO 3 |

The strains set out in Table 1 were deposited by Anidral S.p.A. (Via Pietro Custodi 12, 28100, Novara, NO, Italy) with the DSMZ (Deutsche Sammlung von Mikroorganismen und Zellkulturen GmbH, Inhoffen Str. 7B, D-38124 Brunswick, Germany) at the dates specified above.

The strains DSM 16591, DSM 16593 and DSM 17843 (referred to in the following as YOSO 1, YOSO 2 and YOSO 3, respectively) can be cultivated, preferably at 44°C for at least 5 hours under aerobic conditions, in M17 broth according to Terzaghi (ref. Merck catalogue 1.15029).

The strains YOSO 1, YOSO 2 and YOSO 3 are in the form of short chains of spherical shape. They are optionally anaerobic, gram-positive and catalase-negative bacteria. They are characterized by a failure to grow at 10°C in 40% w/w bile acid and 6.5% w/w NaCl, but they do grow at 45°C. In addition, they are characterized in that they produce L-lactic acid and do not hydrolyze arginine and esculin. They do not express the enzymes necessary for beta-haemolysis. They preferably grow in glucose broth at a pH of 4 to 4.5 and in milk at a pH of 4.3 to 4.5.
The addition of bacteria to the soymilk and their resting (fermenting) in the solution containing the soymilk can be implemented according to processes known in the art.

Said steps may take place without waiting periods in between, or a further step may be provided in which the first component (product of vegetable origin) added to the soymilk is mixed so as to ensure its complete homogeneity before the second component (bacterium) is added. Said further mixing step may be continued for a length of time between 1 minute and 1 hour, preferably between 2 minutes and 30 minutes, and particularly preferred between 3 and 15 minutes.
According to another aspect of the invention, the invention relates to soymilk comprising at least one product of vegetable origin containing starch and products of at least a partial hydrolysis thereof, said soymilk being fermented by at least one bacterium selected from the species *S. thermophilus,* wherein the at least one bacterium selected from the species *S. thermophilus* comprises at least one bacterium selected from the strains described in Table 1 and said product can be obtained by means of the methods according to the invention.

According to a further aspect of the invention, the present invention relates to a soy-based food product obtained from soymilk to which at least one product of vegetable origin containing starch and/or hydrolysis products thereof is added and which is fermented by a strain of *S. thermophilus,* as described above.

The present invention will now be further illustrated with reference to a few embodiments that are provided only for illustrative purposes and not as a limitation of the invention.

### Example 1

The method according to the invention has been tested to prepare fermented soymilk in comparison to that known in the art.

A commercially available soymilk, Alpro soya Wevelgem, from Belgium was thermally pre-treated for 30 minutes at 110°C.

Nine samples having the following compositions were prepared:
1. Sample 1 - Soymilk + tapioca syrup in a concentration of 4.6% v/v,
2. Sample 2 - Soymilk + saccharose in a concentration of 5% v/v and *Bifidobacterium breve* MB233,
3. Sample 3 - Soymilk + tapioca syrup in a concentration of 4.6% v/v and *B. breve* MB233,
4. Sample 4 - Soymilk + saccharose in a concentration of 5% v/v and *S. thermophilus* YOSO3,
5. Sample 5 - Soymilk + tapioca syrup in a concentration of 4.6% v/v and *S. thermophilus* strain YOSO3,
6. Sample 6 - Soymilk + saccharose in a concentration of 5% v/v and *S. thermophilus* YOSO2,
7. Sample 7 - Soymilk + tapioca syrup in a concentration of 4.6% v/v and *S. thermophilus* strain YOSO2,
8. Sample 8 - Soymilk + saccharose in a concentration of 5% v/v and *S. thermophilus* YOSO1,
9. Sample 9 - Soymilk + tapioca syrup in a concentration of 4.6% v/v and *S. thermophilus* strain YOSO1.

In samples 2, 4, 6 and 8, saccharose was used in a concentration of 5% as a carbon and energy source for the bacterial strain with which the resting step was carried out. In fact, soymilk as such is not generally suitable for fermentation by bacterial strains belonging to the genus *Streptococcus* and to at least some species of the genus *Bifidobacterium* in that the oligosaccharides present in said milk are hardly fermentable by said strains.

As for sample 1, said tapioca syrup was added in an amount of 4.6% v/v to the soymilk which, after mixing for 2 minutes, was left to rest for 24 hours at a temperature of 37°C with constant slight stirring.

As for sample 2, saccharose in an amount of 5% v/v and *Bifidobacterium breve* MB233 were added to the soymilk which was left to rest for 24 hours at 37°C with constant slight stirring. Said bacterium originated from a fresh liquid broth culture and was added in a concentration of 3*10⁷ CFU/ml. Said sample was prepared in the following order: addition of the saccharose, short mixing for two minutes, and addition of the strain MB233.

As for sample 3, said tapioca syrup in an amount 4.6% v/v and *Bifidobacterium breve* MB233 were added to the soymilk which was left to rest for 24 hours at 37°C with constant slight stirring. Said bacterium originated from a fresh liquid broth culture and was added in a concentration of 3*10⁷ CFU/ml. Said sample was prepared in the order: addition of the tapioca syrup, short mixing for two minutes, and addition of the strain MB233.

As for sample 4, saccharose in an amount of 5% v/v and *Streptococcus thermophilus* YOSO3 were added to the soymilk which was left to rest for 8 hours at 42°C with constant slight stirring. Said bacterium originated from a fresh liquid broth culture and was added in such a concentration as to lower the pH to values below 4.5 after 7.5 to 8 hours of resting. As with sample 2, the order of preparation was: addition of the saccharose, short mixing for 2 minutes, and addition of the strain YOSO3.

As for sample 5, said tapioca syrup in an amount of 4.6% v/v and *S. thermophilus* YOSO3 were added to the soymilk and left to ferment for 8 hours at 42°C with constant slight stirring. The amounts used of the strain YOSO3 were the same as described for sample 4. As with sample 3, the order of preparation was: addition of the tapioca syrup, short mixing for 2 minutes, and addition of the strain YOSO3.

Samples 6 and 8 were prepared according to the same procedure as applied for preparing sample 4, using respectively the strains set forth above. Samples 7 and 9 were prepared according to the same procedure as applied for preparing sample 5, using respectively the strains set forth above. The various portions were left to rest for the lengths of time described above for each sample, during which time the portions were sampled each hour during the first 8 hours. One further evaluation was, in the end, performed after 24 hours for samples 2 and 3, prepared with the strain *B. breve* MB233.

The samples were then subjected to a smell and taste test in a panel test including 10 persons. Said panel test was carried out with blindfolds and with the samples numbered from 1 to 9, but without any additional information or description. Each person recorded their own impressions concerning their perception of both smell and taste in a table, attributing a score from 0 to 5 to the agreeability and acceptability of the samples under examination. A score of 0 corresponded to the complete absence of a bean-like smell and/or taste, thus denoting a sample fully acceptable from an organoleptic viewpoint, whereas a score of 5 stressed the complete identicalness between the tested sample and the organoleptic characteristics of the initial soymilk, and hence the persistence of the bean-like taste and/or smell.

**Table 2** sets out the pH values of each sample at the end of the resting step, as well as the scores assigned thereto in the course of the panel test:

**Table 2**

| **Sample** | **pH after resting** | **Total score** | **Average score** |
|---|---|---|---|
| 1 | 7.05 | 48 | 4.8 |
| 2 | 4.72 | 41 | 4.1 |
| 3 | 4.60 | 39 | 3.9 |
| 4 | 4.44 | 36 | 3.6 |
| 5 | 4.49 | 4 | 0.4 |
| 6 | 4.35 | 35 | 3.5 |
| 7 | 4.46 | 16 | 1.6 |
| 8 | 4.41 | 40 | 4.0 |
| 9 | 4.30 | 22 | 2.2 |

A persistence of the bean-like smell and taste was identified after 8 hours of the panel test in samples 1, 2, 3, 4, 6 and 8. A significant reduction of said bean-like organoleptic note was found in samples 7 and 9, whereas the organoleptic characteristics were perfectly acceptable in sample 5, fermented with the strain *S. thermophilus* YOSO 3.

It should be emphasized that in the samples in which an organoleptic improvement was noted, this improvement already started to become perceptible after 4 hours, which shows that the biochemical/metabolic activity of the bacterial strain plays a fundamental role in this regard.

Samples 2 and 3 were left to rest for 24 hours, after which a further organoleptic evaluation was performed, without detecting substantial improvements as compared to the situation at the beginning and after 8 hours.

The above results show that tapioca syrup alone (sample 1) and fermentation with only bacteria (samples 2, 4, 6 and 8) are unable to eliminate the undesired organoleptic properties of fermented soymilk. The results of sample 5, and in part also those of samples 7 and 9, show that specific combinations of appropriate bacterial strains with an efficient amount of tapioca syrup are able to reduce - and in one instance to almost completely eliminate - the unfavorable organoleptic notes to be found in fermented soymilk in the prior art. While a specific interaction can in particular be noted between the strains of *Streptococcus termophilus* and tapioca syrup, this feature could not be found at all, or only to a negligible extent, by the Applicant with the strain *Bifidobacterium breve* MB233.

## Claims

1. A method for improving the organoleptic properties of fermented soymilk, said method comprising the following steps:
i) mixing the soymilk with at least one product of vegetable origin containing starch and hydrolysis products thereof; which is obtained by means of thermal, chemical and/or enzymatic treatment of tapioca flour;
ii) fermenting the mixture of step i) with at least one bacterium selected from the species *Streptococcus thermophilus,*
wherein the at least one bacterium of *S. thermophilus* comprises at least one bacterium selected from the group of strains consisting of:
*S. thermophilus* as deposited with Deutsche Sammlung von Mikroorganismen und Zellkulturen GmbH on February 26, 2004 and identified by deposit number DSM 16591,
*S. thermophilus* as deposited with Deutsche Sammlung von Mikroorganismen und Zellkulturen GmbH on February 26, 2004 and identified by deposit number DSM 16593, and
*S. thermophilus* as deposited with Deutsche Sammlung von Mikroorganismen und Zellkulturen GmbH on December 21, 2005 and identified by deposit number DSM 17843.

2. The method according to claim 1, wherein the product of vegetable origin containing starch and hydrolysis products thereof is a syrup or molasses or an aqueous solution containing glucose and/or maltose and/or fructose and complex carbohydrates having a higher molecular weight than that of maltose.

3. The method according to any one of claims 1 to 2, wherein the quantitative proportion of the product of vegetable origin to the soymilk in step (i) is from 0.1% to 50% v/v, preferably from 1% to 25% v/v, more preferably from 2% to 10% v/v.

4. The method according to claim 3, wherein the quantitative proportion of the product of vegetable origin to the soymilk in step (i) is from 3% to 7% v/v.

5. The method according to any one of claims 1 to 4, wherein the fermenting stage of step (ii) lasts for a length of time varying from 1 to 20 hours, preferably from 2 to 15 hours, more preferably from 3 to 10 hours.

6. The method according to any one of claims 1 to 5, wherein the soymilk is pre-heated, prior to being mixed in step (i), to a temperature varying from 30°C to 70°C for a length of time varying from 1 to 30 minutes.

7. Fermented soymilk obtainable by the method according to any one of claims 1 to 6.

8. A soymilk-based food product obtained from soymilk according to claim 7.

## Patentansprüche

1. Verfahren zur Verbesserung der organoleptischen Eigenschaften von fermentierter Sojamilch, wobei das Verfahren die folgenden Schritte umfasst:
i) Mischen der Sojamilch mit wenigstens einem Produkt pflanzlichen Ursprungs, das Stärke und ihre Hydrolyseprodukte enthält und das erhalten wird mittels thermischer, chemischer und/oder enzymatischer Behandlung von Tapiokamehl;
ii) Fermentieren der Mischung von Schritt i) mit wenigstens einem Bakterium ausgewählt aus der Spezies *Streptococcus thermophilus,*
worin das wenigstens eine Bakterium aus *S. thermophilus* wenigstens ein Bakterium umfasst, das ausgewählt wird aus der Gruppe der Stämme bestehend aus:
*S. thermophiles,* hinterlegt bei der Deutschen Sammlung von Mikroorganismen und Zellkulturen GmbH am 26. Februar 2004 unter der Hinterlegungsnummer DSM 16591,
*S. thermophilus,* hinterlegt bei der Deutschen Sammlung von Mikroorganismen und Zellkulturen GmbH am 26. Februar 2004 unter der Hinterlegungsnummer DSM 16593, und
*S. thermophilus,* hinterlegt bei der Deutschen Sammlung von Mikroorganismen und Zellkulturen GmbH am 21. Dezember 2005 unter der Hinterlegungsnummer DSM 17843.

2. Verfahren gemäß Anspruch 1, wobei das Produkt pflanzlichen Ursprungs, das Stärke und ihre Hydrolyseprodukte enthält, ein Sirup oder Molassen oder eine wässrige Lösung ist, die Glukose und/oder Maltose und/oder Fruktose und komplexe Kohlenhydrate mit einem höheren Molekulargewicht als Maltose enthält.

3. Verfahren gemäß einem der Ansprüche 1-2, wobei die quantitativen Verhältnisse des Produkts pflanzlichen Ursprungs zur Sojamilch in Schritt i) von 0,1 bis 50% v/v, vorzugsweise von 1% bis 25% v/v, vorzugsweise von 2% bis 10% v/v betragen.

4. Verfahren gemäß Anspruch 3, bei dem das quantitative Verhältnis des Produkts pflanzlichen Ursprungs zur Sojamilch in Schritt i) von 3 bis 7% v/v beträgt.

5. Verfahren gemäß einem der Ansprüche 1 bis 4, wobei das Fermentierungsstadium von Schritt ii) wenigstens einen Zeitraum von 1 bis 20 Stunden, vorzugsweise, 2 bis 15 Stunden, stärker bevorzugt 3 bis 10 Stunden andauert.

6. Verfahren gemäß einem der Ansprüche 1 bis 5, wobei die Sojamilch vor der Mischung in Schritt i) vorerwärmt wird auf eine Temperatur im Bereich von 30 bis 70°C während eines Zeitraums in Bereich von 1 bis 30 Minuten.

7. Fermentierte Sojamilch, erhältlich nach dem Verfahren gemäß einem der Ansprüche 1 bis 6.

8. Sojamilch-basiertes Lebensmittel, erhalten aus einer Sojamilch gemäß Anspruch 7.

## Revendications

1. Procédé d'amélioration des propriétés organoleptiques du lait de soja fermenté, ledit procédé comprenant les étapes suivantes :
i) mélange du lait de soja avec au moins un produit d'origine végétale contenant de l'amidon et ses produits d'hydrolyse ; qui est obtenu au moyen d'un traitement thermique, chimique et/ou enzymatique de la fécule de tapioca ;
ii) fermentation du mélange de l'étape i) avec au moins une bactérie appartenant à l'espèce *Streptococcus thermophilus,*
dans lequel ladite au moins bactérie de *S. thermophilus* comprend au moins une bactérie choisie dans le groupe de souches constitué par :
*S. thermophilus* déposé auprès de la Deutsche Sammlung von Mikroorganismen und Zellkulturen GmbH le 26 Février 2004 et identifié par le numéro de dépôt DSM 16591,
*S. thermophilus* déposé auprès de la Deutsche Sammlung von Mikroorganismen und Zellkulturen GmbH le 26 Février 2004 et identifié par le numéro de dépôt DSM 16593, et
*S. thermophilus* déposé auprès de la Deutsche Sammlung von Mikroorganismen und Zellkulturen GmbH le 21 Décembre 2005 et identifié par le numéro de dépôt DSM 17843.

2. Procédé selon la revendication 1, dans lequel le produit d'origine végétale contenant de l'amidon et ses produits d'hydrolyse est un sirop ou une molasse ou une solution aqueuse contenant du glucose et/ou du maltose et/ou du fructose et des glucides complexes ayant un poids moléculaire supérieur à celui du maltose.

3. Procédé selon l'une quelconque des revendications 1 à 2, dans lequel la proportion quantitative du produit d'origine végétale par rapport au lait de soja dans l'étape (i) est de 0,1 à 50 % v/v, de préférence de 1 à 25 % v/v, plus préférablement de 2 à 10 % v/v.

4. Procédé selon la revendication 3, dans lequel la proportion quantitative du produit d'origine végétale par rapport au lait de soja dans l'étape (i) est de 3 à 7 % v/v.

5. Procédé selon l'une quelconque des revendications 1 à 4, dans lequel le processus de fermentation de l'étape (ii) dure pendant un laps de temps variant de 1 à 20 heures, de préférence de 2 à 15 heures, plus préférablement de 3 à 10 heures.

6. Procédé selon l'une quelconque des revendications 1 à 5, dans lequel le lait de soja est préchauffé, avant d'être mélangé à l'étape (i), jusqu'à une température variant de 30 à 70 °C pendant un laps de temps variant de 1 à 30 minutes.

7. Lait de soja fermenté pouvant être obtenu par le procédé selon l'une quelconque des revendications 1 à 6.

8. Produit alimentaire à base de lait de soja obtenu à partir du lait de soja selon la revendication 7.
